# EUROPÄISCHE PATENTANMELDUNG

(11) **EP 1 018 491 A1**
(43) Veröffentlichungstag der Anmeldung: **12.07.2000**
(21) Anmeldenummer: 99403143.3
(22) Anmeldetag: 14.12.1999
(51) Int. Cl.: C03B 37/029

(54) **Vorrichtung zum Ziehen einer Faser**

(30) Priorität: 08.01.1999 DE 19900375
(71) Anmelder: ALCATEL, 75008 Paris (FR)
(72) Erfinder: Berndt, Jürgen, Dipl.-Ing., 41748 Viersen (DE); Hoffart, Michael, Dipl.-Ing., 42579 Heiligenhaus (DE); Nowack, Norbert, Prof. Dr.-Ing., 47877 Willich (DE)
(74) Vertreter: Döring, Roger, Dipl.-Ing.

(57) **Zusammenfassung**

Eine Vorrichtung zum Ziehen einer Faser (11), insbesondere einer optischen Glasfaser, aus einer erwärmten Vorform (9) hat ein rohrförmiges, die Vorform (9) in ihrer Längsrichtung zumindest teilweise umschließendes Heizelement (1) und eine das rohrförmige Heizelement (1) mit radialem Abstand umgebende Induktionsspule (4). An der Innenseite (19) des rohrförmigen Heizelements (1) ist ein die Faser (11) und die Vorform (9) mit radialem Abstand umgebendes Schutzrohr (20) vorgesehen. Das Schutzrohr (20) verhindert zuverlässig einen Abbrand des Heizelements und auf diese Weise eine Verschlechterung der Eigenschaften der Faser (11) (Fig.).

## Beschreibung

Die vorliegende Erfindung betrifft eine Vorrichtung zum Ziehen einer Faser, insbesondere einer optischen Glasfaser, aus einer erwärmten Vorform, mit einem rohrförmigen, die Vorform in ihrer Längsrichtung zumindest teilweise umschließenden Heizelement und einer das rohrförmige Heizelement mit radialem Abstand umgebenden Induktionsspule.

Wegen der geringen äußeren Abmessungen von optischen Glasfasern ist eine unmittelbare Herstellung des geforderten Faserprofils aus unterschiedlichen Glassorten nicht möglich. Die Basis für die Herstellung einer optischen Glasfaser bildet daher eine sogenannte Vorform mit einem Durchmesser im Zentimeterbereich, die durch die unterschiedlichsten Verfahren hergestellt werden kann.

Glas ist ein amorpher Werkstoff, der durch Erwärmen in einen Zustand geringer Viskosität gebracht werden kann. Bei den für die Faserherstellung heute üblichen Quarzgläsern tritt eine merkliche Erweichung des Glases erst bei Temperaturen von ca. 2000 bis 2200°C auf. Die Glaserweichung bei entsprechender Temperatur wird benutzt, um die Vorform zu einer Glasfaser geringer Dicke auszuziehen. Zu diesem Zweck wird die Vorform in einem sogenannten Ziehofen erwärmt.

In der DE 43 39 077 C2 ist ein solcher Ziehofen beschrieben, der ein rohrförmiges Heizelement aus Graphit und eine das rohrförmige Heizelement mit radialem Abstand umgebende ringförmige Induktionsspule aufweist. Aufgrund der hohen Temperaturen des Heizelements und des im mit einem Schutzgas gespülten Ofenraum vorhandenen Sauerstoffs ist es unter Umständen möglich, daß aus der heißen Oberfläche des aus Graphit ausgebildeten Heizelements Graphitpartikel freigesetzt werden, die sich an der Oberfläche der Glasfaser anlagern. Die Freisetzung der Graphit-Partikel führt zudem zu einem Abbrand der Oberfläche des Heizelements und damit zu einer verkürzten Lebensdauer des Heizelements.

Der vorliegenden Erfindung liegt deshalb das Problem zugrunde, die Standzeit des Heizelements eines Ziehofens zu verlängern, das Freisetzen von Partikeln aus der heißen Oberfläche des Heizelements zu vermeiden und auf diese Weise eine Verunreinigung der Oberfläche der gezogenen Faser durch vom Heizelement freigesetzte Partikel zuverlässig zu verhindern.

Dieses Problem wird gemäß der Erfindung gelöst, indem an der Innenseite des rohrförmigen Heizelements ein die Faser und die Vorform mit radialem Abstand umgebendes Schutzrohr vorgesehen ist.

Die durch die Erfindung erzielbaren Vorteile bestehen insbesondere darin, daß durch das Schutzrohr ein Abbrand des rohrförmigen Heizelements an seiner heißen inneren Oberfläche verhindert wird, indem das Heizelement durch das Schutzrohr von im Ofenraum vorhandenem Sauerstoff abgeschottet wird. Die Standzeiten des Heizelements werden wesentlich verlängert und die Qualität der aus der Vorform gezogenen Fasern durch die vermiedene Partikelemission des Heizelements wesentlich verbessert.

Durch die in den Unteransprüchen aufgeführten Merkmale sind vorteilhafte Weiterbildungen und Verbesserungen der Erfindung möglich.

Für eine besonders wirksame Abschottung des Heizelements von im Ofenraum vorhandenem Sauerstoff ist es von Vorteil, wenn das Schutzrohr sauerstoffundurchlässig ist.

Besonders vorteilhaft ist es, wenn das Schutzrohr aus Glaskohlenstoff ausgebildet ist. Glaskohlenstoff weist eine hohe Temperaturbeständigkeit und eine große Dauerfestigkeit auf. Isotrope Körper aus Glaskohlenstoff haben eine hohe Oberflächengüte, eine dichte Struktur, eine hohe chemische Reinheit und eine gute chemische Beständigkeit. Ein aus Glaskohlenstoff ausgebildetes Schutzrohr weist zudem ähnliche Eigenschaften wie ein aus Graphit ausgebildetes Heizelement auf.

Von Vorteil ist es ebenfalls, wenn das Schutzrohr aus Mesophasen-Graphit ausgebildet ist, das die Emission von Partikeln aus der Oberfläche des Heizelements verhindert und bei den hohen im Ziehofen herrschenden Temperaturen selbst keine Partikel freisetzt.

Aus den gleichen Gründen ist es auch von Vorteil, wenn das Schutzrohr aus einem keramischen Werkstoff wie Siliziumkarbid oder Siliziumnitrid ausgebildet ist. Diese Werkstoffe haben ähnliche elektrische und physikalische Eigenschaften wie Graphit, das in vielen Fällen für das Heizelement verwendet wird.

Für einen einfachen Aufbau der erfindungsgemäßen Vorrichtung und ein zuverlässiges Verhindern des Abbrandes der Oberfläche des Heizelements ist es von Vorteil, wenn das Schutzrohr und das Heizelement eine Einheit bilden, insbesondere wenn das Schutzrohr in das Heizelement integriert ist.

Ein Ausführungsbeispiel der Erfindung ist in der Zeichnung vereinfacht dargestellt und in der nachfolgenden Beschreibung näher erläutert.

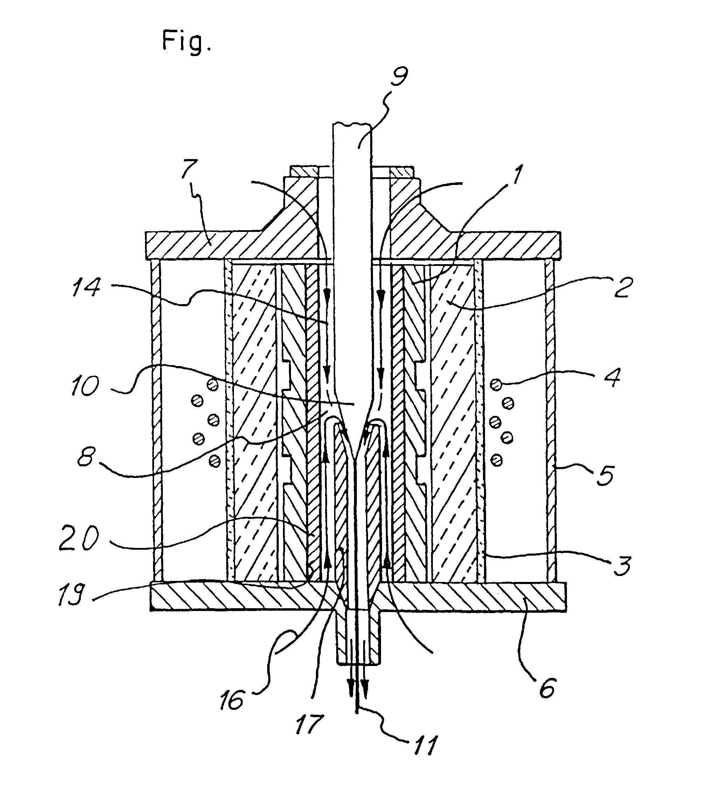

Die in der Fig. 1 beispielhaft dargestellte Vorrichtung zum Ziehen einer Faser 11, insbesondere einer optischen Glasfaser, aus einer erwärmten Vorform 9 weist ein rohrförmiges Heizelement 1 auf, das z. B. aus Graphit ausgebildet ist. In radialer Richtung nach außen wird das rohrförmige Heizelement 1 von einer thermischen Isolierung 2 umschlossen, die beispielsweise durch Graphitmatten gebildet ist. Um die Graphitmatte in ihrer Lage zu halten, ist die thermische Isolierung 2 von einem Quarzrohr 3 umschlossen. In radialer Richtung nach außen schließt sich an das die thermische Isolierung 2 umschließende Quarzrohr 3 z. B. eine ringförmige Induktionsspule 4 an, die durch ihr elektromagnetisches Feld eine Erwärmung des mit einer kurzgeschlossenen Sekundärspule vergleichbaren Heizelements 1 bewirkt.

An der Innenseite oder inneren Wandung 19 des rohrförmigen Heizelements 1 ist ein die Faser 11 und die Vorform 9 mit radialem Abstand umgebendes Schutzrohr 20 angeordnet, das sauerstoffundurchlässig ist. Dieses Schutzrohr 20 ist beispielsweise aus Glaskohlenstoff ausgebildet, es kann aber auch aus Mesophasen-Graphit oder einem keramischen Werkstoff wie z. B. Siliziumkarbid oder Siliziumnitrid ausgebildet sein. Das Schutzrohr 20 liegt bei dem dargestellten Ausführungsbeispiel unmittelbar an der Innenseite des rohrförmigen Heizelements 1 an und bildet mit diesem eine Einheit. Es ist ebenfalls möglich, das Schutzrohr 20 in das Heizelement 1 zu integrieren. Das Schutzrohr 20 verhindert, daß es durch im Ziehofen vorhandenen Sauerstoff zu einem Abbrand an der Innenseite 19 des Heizelements 1 kommt, bei dem aus der Oberfläche der Innenseite 19 des Heizelements 20 Partikel freigesetzt werden, die sich an der Oberfläche der Faser 11 anlagern und die optischen und mechanischen Eigenschaften der Faser beeinträchtigen können. Zudem wird durch die Abschottung des Heizelements 1 und die Minimierung des Abbrandes des Heizelements die Standzeit des Heizelements wesentlich verlängert.

Die Vorrichtung ist nach außen durch eine rohrförmige Außenwand 5 sowie durch eine flanschartige Bodenplatte 6 und einen flanschartigen Ofendeckel 7 abgeschlossen. Durch den Ofendeckel 7 wird die Vorform 9 in einen Ofenraum 8 eingeführt. Nach einer entsprechenden Erwärmung des unteren Endes der Vorform 9 wird die Faser 11 aus einer sogenannten Ziehzwiebel 10 nach Überführung des Glasmaterials in den schmelzflüssigen Zustand ausgezogen. Wie durch Pfeile 14 angedeutet ist, wird durch nicht näher dargestellte Düsen im Ofendeckel 7 ein Schutzgas, beispielsweise Argon, Stickstoff oder dergleichen, in den Ofenraum 8 eingeführt, wobei die Vorform 9 von diesem Gasstrom in Ziehrichtung der Faser 11 umspült wird. Um zu vermeiden, daß das von oben eingeführte Gas im Bereich der Ziehzwiebel 10 aus der laminaren Strömung in eine turbulente Strömung übergeht, wird entgegen der Strömungsrichtung dieses Gases von unten her beispielsweise mit Hilfe eines zusätzlichen Führungsrohrs 17 ein durch Pfeile 16 angedeutetes zusätzliches Spülgas eingebracht, das den gesamten Spülgasstrom stabilisiert. Das Führungsrohr 17 erstreckt sich in axialer Richtung bis in den Ziehbereich, d. h. bis in den Hochtemperaturbereich der Vorrichtung hinein. Das zusätzliche Spülgas (Pfeile 16) wird an dem oberen Ende des Führungsrohrs 17 durch das von oben kommende Gas (Pfeile 14) umgelenkt und im Innern des Führungsrohrs 17 nach unten geleitet, wobei es die Faser 11 umhüllt.

## Patentansprüche

1. Vorrichtung zum Ziehen einer Faser (11), insbesondere einer optischen Glasfaser, aus einer erwärmten Vorform (9), mit einem rohrförmigen, die Vorform (9) in ihrer Längsrichtung zumindest teilweise umschließenden Heizelement (1) und einer das rohrförmige Heizelement (1) mit radialem Abstand umgebenden Induktionsspule (4), **dadurch gekennzeichnet,** daß an der Innenseite (19) des rohrförmigen Heizelements (1) ein die Faser (11) und die Vorform (9) mit radialem Abstand umgebendes Schutzrohr (20) vorgesehen ist.

2. Vorrichtung nach Anspruch 1, **dadurch gekennzeichnet**, daß das Heizelement (1) aus Graphit ausgebildet ist.

3. Vorrichtung nach Anspruch 1 oder 2, **dadurch gekennzeichnet**, daß das Schutzrohr (20) sauerstoffundurchlässig ist.

4. Vorrichtung nach einem der Ansprüche 1 bis 3, **dadurch gekennzeichnet**, daß das Schutzrohr (20) aus Glaskohlenstoff ausgebildet ist.

5. Vorrichtung nach einem der Ansprüche 1 bis 3, **dadurch gekennzeichnet,** daß das Schutzrohr (20) aus Mesophasen-Graphit ausgebildet ist.

6. Vorrichtung nach einem der Ansprüche 1 bis 3, **dadurch gekennzeichnet,** daß das Schutzrohr (20) aus einem keramischen Werkstoff ausgebildet ist.

7. Vorrichtung nach Anspruch 6, **dadurch gekennzeichnet,** daß das Schutzrohr (20) aus Siliziumkarbid ausgebildet ist.

8. Vorrichtung nach Anspruch 6, **dadurch gekennzeichnet,** daß das Schutzrohr (20) aus Siliziumnitrid ausgebildet ist.

9. Vorrichtung nach einem der Ansprüche 1 bis 8, **dadurch gekennzeichnet,** daß das Schutzrohr (20) und das Heizelement (1) eine Einheit bilden.

10. Vorrichtung nach einem der Ansprüche 1 bis 9 **dadurch gekennzeichnet,** daß das Schutzrohr (20) in das Heizelement (1) integriert ist.
